# EUROPÄISCHE PATENTSCHRIFT

(11) **EP 3 790 397 B1**
(45) Veröffentlichungstag und Bekanntmachung des Hinweises auf die Patenterteilung: **20.05.2026**
(21) Anmeldenummer: 19724136.7
(22) Anmeldetag: 07.05.2019
(51) Int. Cl.: A47J 37/01, A21B 3/13

(54) **OFENFORM MIT STEIFER RANDANORDNUNG**
OVEN MOLD HAVING A RIGID EDGE ARRANGEMENT
PLAT À FOUR COMPRENANT UN ARRANGEMENT PÉRIPHÉRIQUE RIGIDE

(30) Priorität: 08.05.2018 DE 102018207166
(43) Veröffentlichungstag der Anmeldung: 17.03.2021
(73) Patentinhaber: Zenker Backformen GmbH & Co. KG, 91217 Hersbruck (DE)
(72) Erfinder: YEUNG, Raymond, Hong Kong (HK)
(74) Vertreter: Rau, Schneck & Hübner Patentanwälte Rechtsanwälte PartGmbB
(86) Internationale Anmeldenummer: PCT/EP2019/061673
(87) Internationale Veröffentlichungsnummer: WO 2019/215143

(56) Entgegenhaltungen:
- EP-A2- 1 641 344
- EP-A2- 1 641 344
- EP-B1- 1 641 344
- CN-A- 108 142 468
- FR-A1- 3 001 106
- FR-A1- 3 001 106
- US-A1- 2005 056 642
- US-A1- 2005 056 642
- US-A1- 2005 199 132
- US-A1- 2005 199 132
- US-A1- 2009 061 128
- US-A1- 2009 061 128

## Beschreibung

Die vorliegende Patentanmeldung nimmt die Priorität der deutschen Patentanmeldung DE 10 2018 207 166.7 in Anspruch, deren Inhalt durch Bezugnahme hierin aufgenommen wird.

Die Erfindung betrifft eine Ofenform, wie Backform, Auflaufform bzw. Grillform, zum Zubereiten von Speisen in einem Ofen, insbesondere in einem Backofen, gemäß dem Oberbegriff des Anspruchs 1. Ferner richtet sich die Erfindung auf ein Verfahren zur Herstellung einer derartigen Ofenform.

Ofenformen sind aus dem Stand der Technik bekannt. Sie sind häufig aus einem Metallblech gebildet, was sich in der Praxis bewährt hat. Derartige Ofenformen aus Metallblech zeichnen sich im Allgemeinen durch ihre Langlebigkeit und Formbeständigkeit aus.

Der Stand der Technik kennt auch Ofenformen aus Silikon, welche sich wegen ihres geringen Gewichts und ihrer einfachen Reinigung großer Beliebtheit erfreuen.

Die US 2009/061128 A1 offenbart eine Silikon-Backform mit einer oberen Randanordnung, die einen eingebetteten Trag-Drahtring aufweist.

Die EP 1 641 344 B1 offenbart eine versteifte Backform, deren Grundkörper aus einem elastischen Material besteht.

Die US 2005/056642 A1 offenbart eine flexible Silikonform mit einem umlaufenden Rand, der dicker als Wände eines Behältnisses der Silikonform sein kann. Die Silikonform weist an dem Rand flache Greifzonen auf, die in Silikon eingebettete Verstärkungselemente haben.

Aus der US 2005/0199132 A1, die den nächsten Stand der Technik bildet, ist ein Tragelement bekannt, das eine Vielzahl von Öffnungen aufweist und beispielsweise zweiteilig ist. Jede Öffnung ist ausgebildet, um einen flexiblen Muffinnapf aufzunehmen.

Eine in der FR 3 001 106 A1 offenbarte Form weist eine Verstärkung in Form von Glasfasern in Silikon auf.

Die DE 20 2013 102 957 U1 offenbart eine Auffangvorrichtung zum Auffangen überlaufender Kochflüssigkeit, die an einem Essenszubereitungsbehälter lösbar anordenbar ist.

Die DE 10 2004 054 800 A1 offenbart eine Backform mit einem Trägerteil aus Metall und einem auf das Trägerteil aufzulegenden Teil aus Silikon.

Aus der DE 20 2006 004 861 U1 ist eine Backform bekannt, die einen Formkörper aus einem elastisch-flexiblen Kunststoffmaterial und eine Formversteifung umfasst.

Der Erfindung liegt die Aufgabe zugrunde, eine Ofenform bereitzustellen, die zum einen äußerst benutzerfreundlich ist und zum anderen eine besonders gute Zubereitung von Speisen erlaubt. Ein entsprechendes Verfahren soll außerdem geschaffen werden.

Diese Aufgabe wird erfindungsgemäß durch die in den Hauptansprüchen 1 und 14 angegebenen Merkmale gelöst. Der Kern der Erfindung liegt in einer Randanordnung, die eine höhere Steifigkeit als der Ofenform-Grundkörper hat und somit insbesondere der gesamten Ofenform eine gewisse Steifigkeit bzw. Verwindungssteifigkeit verleiht. Der Ofenform-Grundkörper ist demnach weniger starr bzw. steif als die Randanordnung. Die Ofenform ist besonders gut handhabbar. Sie verbindet die Vorteile der bekannten unterschiedlichen Ofenformtypen.

Es ist zweckmäßig, wenn sich ein Material des Ofenform-Grundkörpers und der Randanordnung, insbesondere in ihrer Zusammensetzung, voneinander unterscheiden. Die Randanordnung ist beispielsweise aus einem anderen Material wie der Ofenform-Grundkörper gebildet.

Der Silikon umfassende Ofenform-Grundkörper ist äußerst hitzebeständig. Ferner ist dieser besonders einfach, wie in einer herkömmlichen Spülmaschine, reinigbar. So sind auch äußerst gute Zubereitungsergebnisse erzielbar, was zu besonders wohlschmeckenden Speisen führt.

Der Ofenform-Grundkörper hat günstigerweise eine runde, ovale, elliptische oder rechteckige Grundform, wobei Ecken vorzugsweise abgerundet sind.

Die Randanordnung ist geometrisch an eine Außenkontur des Ofenform-Grundkörpers angepasst. Sie hat vorzugsweise eine im Wesentlichen entsprechende, insbesondere kreisringförmige, ovale, elliptische oder rechteckige, Kontur. Es ist zweckmäßig, wenn die Randanordnung eine im Wesentlichen einheitliche Breite hat.

Die Randanordnung ist ursprünglich günstigerweise zweiteilig. Eine derartige Randanordnung ist besonders sicher an dem Ofenform-Grundkörper festlegbar. Sie hat eine vergleichsweise hohe (Verwindungs)Steifigkeit.

Bei einer zweiteiligen Randanordnung hat jedes Randteil eine Teilaussparung, deren Gesamthöhe der Höhe bzw. Dicke eines Randbereichs des Ofenform-Grundkörpers entspricht. Beispielsweise hat bei einer einteiligen nicht-erfindungsgemäßen Randanordnung die Randanordnung eine Aussparung, deren Höhe der Höhe bzw. Dicke eines Randbereichs des Ofenform-Grundkörpers entspricht.

Die Randanordnung ist fest und unlösbar an dem Ofenform-Grundkörper angeordnet. Die Randanordnung ist unten und oben an einem Randbereich des Ofenform-Grundkörpers angeordnet.

Die umfangsseitig geschlossene Randordnung verleiht der Ofenform eine vergleichsweise hohe (Verwindungs)Steifigkeit, was deren Handhabung vereinfacht. Alternativ ist die Randanordnung nicht-erfindungsgemäß beispielsweise durch mindestens zwei, insbesondere getrennt zueinander angeordnete, Randkörper gebildet, die sich dann über einen Teilbereich an dem Ofenform-Grundkörper erstrecken.

Zumindest die Unterseite der Randanordnung ist eben.

Die Ofenform ist beispielsweise als Backblech, wie zur Zubereitung von Quiche, Pizza, Blechkuchen, Muffins, Cupcakes oder dergleichen, ausgeführt. Alternativ ist diese als Auflaufform bzw. Grillform ausgeführt. Weitere vorteilhafte Ausgestaltungen der Erfindung sind in den Unteransprüchen angegeben.

Der Ofenform-Grundkörper gemäß dem Unteranspruch 3 ist zumindest bereichsweise verformbar bzw. elastisch, was beispielsweise eine Entfernung der zubereiteten Speise aus dem Ofenform-Grundkörper vereinfacht. Der Ofenform-Grundkörper ist so außerdem, insbesondere in seiner Höhe, komprimierbar, was eine besonders platzsparende Aufbewahrung der Ofenform erlaubt. Besonders gute Zubereitungsergebnisse sind so erzielbar.

Der Ofenform-Grundkörper gemäß dem Unteranspruch 4 umfasst Fasern. Es ist zweckmäßig, wenn der Ofenform-Grundkörper aus einem Verbundmaterial gebildet ist. Günstigerweise weist das Verbundmaterial Silikon und die Fasern, insbesondere Glasfasern, auf. Das Silikon ist vorzugsweise faserverstärkt.

Günstigerweise begrenzt der Ofen-Grundkörper mindestens eine Speisen-Zubereitungsaufnahme räumlich, insbesondere seitlich und nach unten.

Beispielsweise hat die Ofenform einen Boden und einen Rand, der sich randseitig an den Boden anschließt und unter Bildung einer Speisen-Zubereitungsaufnahme von dem Boden aufragt. Alternativ weist die Ofenform zum Beispiel eine plane Oberfläche und mindestens eine, vorzugsweise mehrere, von der Oberfläche ausgehende, Vertiefung/en auf, die die Speisen-Zubereitungsaufnahme/n bildet/bilden.

Gemäß einer nicht-erfindungsgemäßen Ausführungsform ist die Randanordnung, insbesondere ursprünglich, einteilig. Dies ist besonders fertigungsfreundlich. Sie ist dann beispielsweise unten oder oben an einem Randbereich des Ofenform-Grundkörpers angeordnet.

Die Randanordnung gemäß dem Unteranspruch 6 verleiht der Ofenform eine gewisse (Verwindungs)Steifigkeit. Alternativ ist die Randanordnung auch verformbar bzw. elastisch.

Vorzugsweise umfasst die Randanordnung Silikon, Nylon, Metall und/oder Kunststoff, wie Polybutylenterephthalat (PBT) bzw. Polyphthalamid (PPA).

Die Randanordnung gemäß dem Unteranspruch 7 ist besonders einfach herstellbar. Ferner ist eine derartige Ofenform besonders gut über die Randanordnung in einem Ofen, wie Backofen, anordenbar. Dies gilt insbesondere, wenn die Randanordnung zum Eingreifen in Führungen und/oder Schienen in dem Ofen dient, was bevorzugt ist. Eine besonders gute Verschiebbarkeit ist ferner durch eine derartige Randanordnung gewährleistet.

Die Randanordnung ist gemäß dem Unteranspruch 8 stoffschlüssig, kraftschlüssig und/oder formschlüssig an dem Ofenform-Grundkörper festgelegt.

Bevorzugt ist die Randanordnung an den Ofenform-Grundkörper angeklebt, angeschweißt und/oder angespritzt.

Die Ofenform gemäß dem Unteranspruch 11 ist besonders gut handhabbar und ist so äußerst benutzerfreundlich. Es ist zweckmäßig, wenn der mindestens eine Griff durch mindestens eine bereichsweise Verbreitung der Randanordnung nach seitlich außen, eine Griffausnehmung oder dergleichen gebildet ist. Der mindestens eine Griff ist vorzugsweise integraler Bestandteil der Randanordnung. Alternativ sind der mindestens eine Griff und die Randanordnung ursprünglich separat ausgeführt.

Die Randanordnung gemäß dem Unteranspruch 12 ist besonders kostengünstig fertigbar.

Die Ofenform gemäß dem Unteranspruch 13 ist insbesondere für den Heimgebrauch ausgebildet. Es ist zweckmäßig, wenn die Ofenform in herkömmliche Öfen, insbesondere Backöfen, einsetzbar ist, die im normalen Hausgebrauch Anwendung finden.

Nachfolgend werden unter Bezugnahme auf die beigefügte Zeichnung bevorzugte Ausführungsformen beispielhaft beschrieben. Dabei zeigen:
- Fig. 1: eine perspektivische Ansicht einer erfindungsgemäßen Ofenform,
- Fig. 2: eine perspektivische Ansicht eines Ofenform-Grundkörpers der in Fig. 1 gezeigten Ofenform,

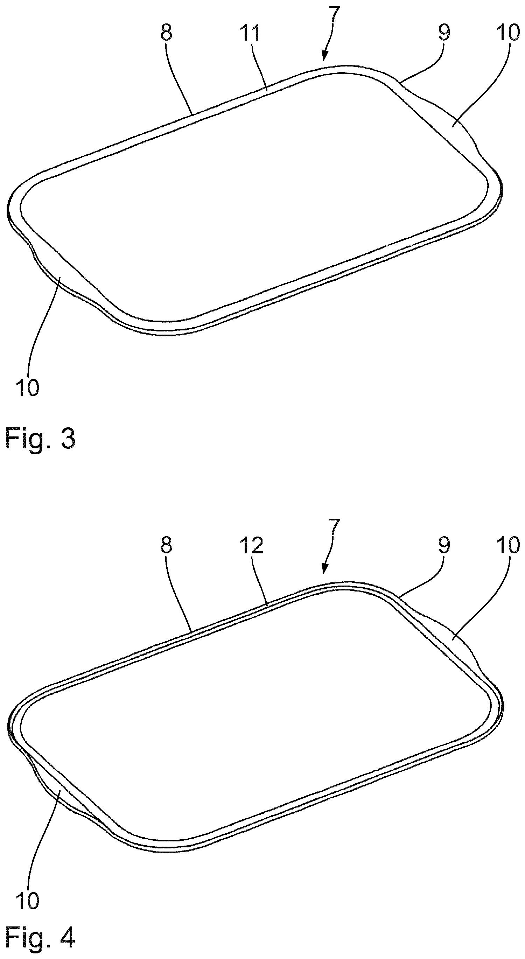

- Fig. 3: eine perspektivische Ansicht eines oberen Randteils der in Fig. 1 gezeigten Ofenform,
- Fig. 4: eine perspektivische Ansicht eines unteren Randteils der in Fig. 1 gezeigten Ofenform,

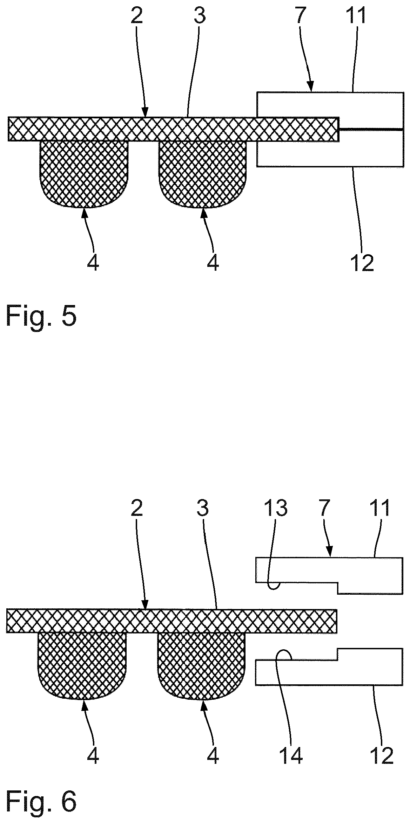

- Fig. 5: einen Teilschnitt durch die in Fig. 1 gezeigte Ofenform, der den Ofenform-Grundkörper und die an diesem angeordnete Randanordnung zeigt,
- Fig. 6: eine Explosionsansicht von Fig. 5,
- Fig. 7: eine perspektivische Ansicht einer nicht-erfindungsgemäßen Ofenform gemäß einer zweiten Ausführungsform,
- Fig. 8: eine perspektivische Ansicht der Randanordnung der in Fig. 7 dargestellten Ofenform,
- Fig. 9: einen Teilschnitt durch die in Fig. 7 gezeigte Ofenform, der den Ofenform-Grundkörper und die an diesem angeordnete Randanordnung zeigt, und
- Fig. 10: eine Explosionsansicht von Fig. 9.

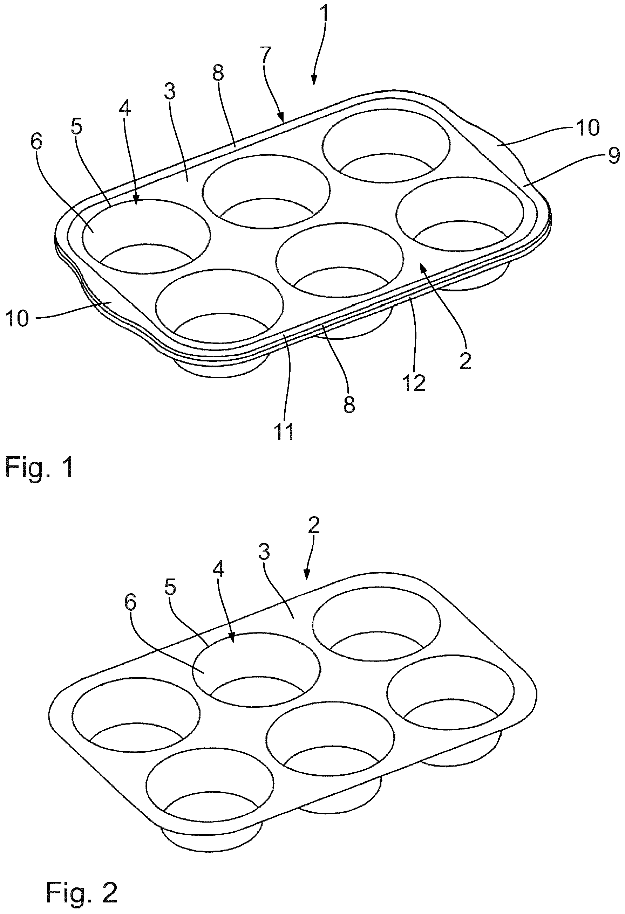

Eine in Fig. 1 in ihrer Gesamtheit dargestellte Backform 1 ist im Wesentlichen rechteckig ausgebildet. Sie ist für die Verwendung in bekannten Backöfen vorgesehen, wie sie zuhause Anwendung finden. Dort kann sie in verschiedenen Höhen eingeschoben werden. Dazu sind in dem Backofen entsprechende Schienen bzw. Führungen vorgesehen.

Die Backform 1 weist einen Grundkörper 2 auf, der eine im Wesentlichen plane Oberfläche 3 hat. Die Oberfläche 3 liegt in einer Hauptebene.

Die Backform 1 hat mehrere muldenförmige Vertiefungen 4, die in dem Grundkörper 2 beabstandet zueinander angeordnet sind. Die Vertiefungen 4 sind identisch ausgebildet. Sie sind in dem Grundkörper 2 in Zeilen bzw. Spalten angeordnet.

Die Vertiefungen 4 sind in der Hauptebene kreisförmig ausgebildet. Sie gehen von der Oberfläche 3 aus nach unten. Die Vertiefungen 4 gehen von einem Begrenzungsrand 5 aus, der in der Hauptebene liegt. An jeden Begrenzungsrand 5 schließt sich eine Vertiefungswandung 6 des Grundkörpers 2 an, die die entsprechende Vertiefung 4 nach unten und seitlich begrenzt. Jede Vertiefung 4 ist im Querschnitt kreisförmig. Es ist zweckmäßig, wenn sich jede Vertiefung 4 von dem Begrenzungsrand 5 aus nach unten verjüngt.

Der Grundkörper 2 hat einen seitlich äußeren Randbereich, der umfangseitig geschlossen bzw. endlos ist. Der Randbereich liegt in der Hauptebene.

Der Grundkörper 2 ist aus glasfaserverstärktem Silikon gebildet und ist verformbar. Ein Glasfasergewebe bzw. -Prepreg wird zwischen 10 Minuten und 30 Minuten einer Temperatur zwischen 100 °C und 300 °C zur Bildung des Grundkörpers 2 ausgesetzt. Anschließend wird dieses entwachst. Flüssiges Silikon wird aufgesprüht. Das mit flüssigem Silikon benetzte Gewebe bzw. Prepreg wird danach in einer Heißpresse gepresst bzw. geformt. Überschüssige Teile werden entfernt.

Die Backform 1 hat außerdem eine Randanordnung 7, die an dem Grundkörper 2 randseitig befestigt ist und umfangseitig geschlossen bzw. endlos ist. Die Randanordnung 7 weist eine im Wesentlichen rechteckförmige Kontur auf und erstreckt sich seitlich beabstandet zu den Vertiefungen 4. Sie umläuft umfangsseitig den Randbereich des Grundkörpers 2.

Die Randanordnung 7 umfasst zwei parallel zueinander verlaufende Längsstege 8 und zwei sich an die Längsstege 8 endseitig anschließende Querstege 9, die parallel zueinander verlaufen und sich im Wesentlichen senkrecht zu den Längsstegen 8 erstrecken.

Außerdem hat die Randanordnung 7 zwei Griffe 10, die günstigerweise an den Querstegen 9 ausgebildet sind. Jeder Griff 10 ist durch eine bereichsweise Verbreiterung der Randanordnung 7 nach seitlich außen gebildet.

Die Randanordnung 7 setzt sich aus einem oberen Randteil 11 und einem unteren Randteil 12 zusammen. Das obere Randteil 11 und das untere Randteil 12 haben im Wesentlichen eine identische Form.

Die Randteile 11, 12 haben randseitige Aussparungen 13 bzw. 14, die in montiertem Zustand der Randanordnung 7 einander gegenüberliegen und den Randbereich des Grundkörpers 2 aufnehmen. Die Randanordnung 7 übergreift randseitig den Grundkörper 2. Die Randteile 11, 12 berühren einander in einem seitlich äußeren Bereich. Die Aussparungen 13, 14 haben zusammen eine Höhe, die der Höhe bzw. Dicke des Randbereichs des Grundkörpers 2 entspricht.

Die Randteile 11, 12 sind durch Schweißen, wie Ultraschallschweißen, oder Kleben an dem Grundkörper 2 angebracht bzw. festgelegt. Sie sind jeweils durch Spritzgießen gebildet.

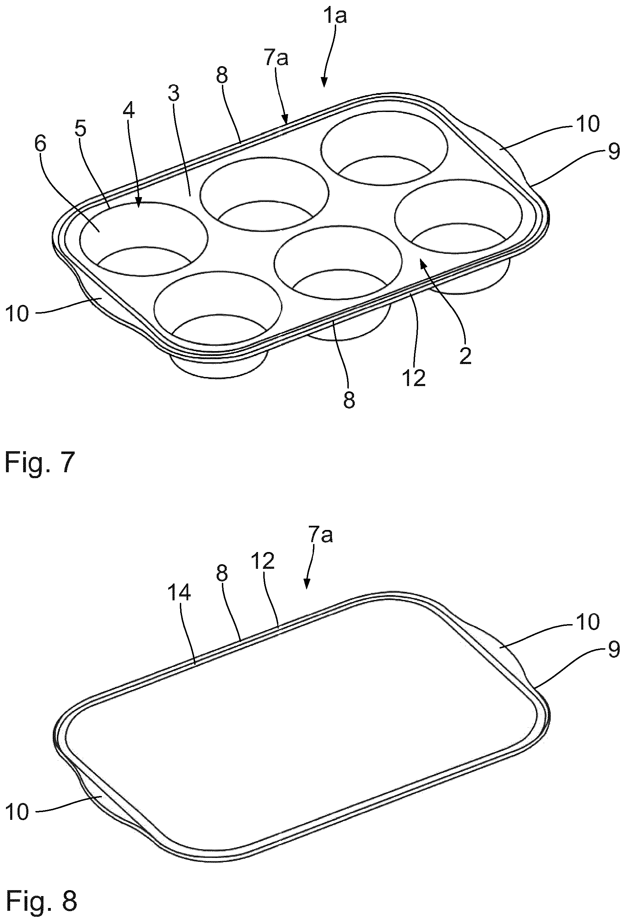

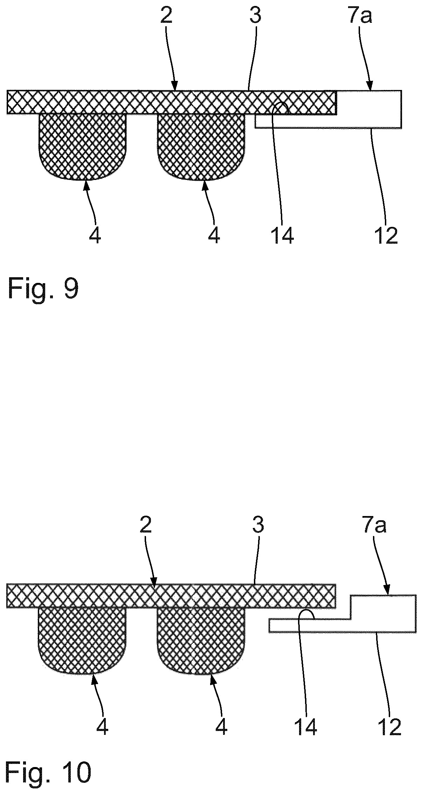

Nachfolgend wird unter Bezugnahme auf die Fig. 7 bis 10 eine zweite Ausführungsform beschrieben. Identische Teile erhalten dieselben Bezugszeichen wie bei der vorherigen Ausführungsform, auf deren Beschreibung hiermit explizit verwiesen wird. Konstruktiv unterschiedliche, jedoch funktionell gleichartige Teile erhalten dieselben Bezugszeichen mit einem nachgeordneten "a".

Die in Fig. 7 in ihrer Gesamtheit dargestellte Backform la unterscheidet sich von der Backform 1 gemäß der vorherigen Ausführungsform durch ihre Randanordnung 7a. Im Vergleich zu dieser ist die Randanordnung 7a einteilig. Sie ist lediglich durch ein Randteil 12 gebildet, das den Randbereich des Grundkörpers 2 untergreift. Die randseitige Aussparung 14 hat eine Höhe, die der Höhe bzw. Dicke des Randbereichs des Grundkörpers 2 entspricht. Das Randteil 12 erstreckt sich auch seitlich neben dem Grundkörper 2. Eine Oberseite des Randteils 12 fluchtet seitlich neben dem Grundkörper 2 mit der Oberseite des Grundkörpers 2.

Der Grundkörper 2 wird in eine Form einer Spritzgießmaschine eingelegt. Das Randteil 12 wird an diesen unten randseitig angespritzt. Dabei werden auch die Griffe 10 gebildet.

Gemäß einer alternativen, nicht dargestellten Ausführungsform wird analog zu der zweiten Ausführungsform ein Randteil 11 oben an den Randbereich des Grundkörpers 2 angespritzt.

## Patentansprüche

1. Ofenform zur Zubereitung von Speisen,
a) mit einem Ofenform-Grundkörper (2), der Silikon umfasst, und
b) mit einer an dem Ofenform-Grundkörper (2) randseitig angeordneten Randanordnung (7), die
i) steifer als der Ofenform-Grundkörper (2) ist,
ii) umfangsseitig geschlossen ist, und
iii) geometrisch an eine Außenkontur des Ofenform-Grundkörpers (2) angepasst ist,
c) wobei sich die Randanordnung (7) aus einem unteren Randteil (12) und einem oberen Randteil (11) zusammensetzt,
d) wobei die Randteile (12, 11) an einander gegenüberliegenden Seiten eines Randbereichs des Ofenform-Grundkörpers (2) angeordnet sind,
e) wobei die Randanordnung (7) unten und oben an dem Randbereich des Ofenform-Grundkörpers (2) angeordnet ist,
f) wobei zumindest eine Unterseite der Randanordnung (7) eben ist, **dadurch gekennzeichnet, dass**
g) die Randanordnung (7) eine Aussparung (13, 14) aufweist, in welche der Ofenform-Grundkörper (2) eingreift,
h) jedes Randteil (12, 11) eine Teilaussparung hat, deren Gesamthöhe einer Dicke des Randbereichs des Ofenform-Grundkörpers (2) entspricht, und
i) die Randanordnung (7) fest und unlösbar an dem Ofenform-Grundkörper (2) angeordnet ist.

2. Ofenform nach Anspruch 1, **dadurch gekennzeichnet, dass** der Ofenform-Grundkörper (2) unmetallisch ist.

3. Ofenform nach Anspruch 1 oder 2, **dadurch gekennzeichnet, dass** der Ofenform-Grundkörper (2) flexibel ist.

4. Ofenform nach einem der vorherigen Ansprüche, **dadurch gekennzeichnet, dass** der Ofenform-Grundkörper (2) Fasern, insbesondere Glasfasern, umfasst.

5. Ofenform nach Anspruch 4, **dadurch gekennzeichnet, dass** die Fasern netzartig angeordnet sind.

6. Ofenform nach einem der vorherigen Ansprüche, **dadurch gekennzeichnet, dass** die Randanordnung (7) starr bzw. im Wesentlichen starr ist.

7. Ofenform nach einem der vorherigen Ansprüche, **dadurch gekennzeichnet, dass** sich die Randanordnung (7) in einer Ebene erstreckt.

8. Ofenform nach einem der vorherigen Ansprüche, **dadurch gekennzeichnet, dass** die Randanordnung (7) stoffschlüssig, kraftschlüssig und/oder formschlüssig an dem Ofenform-Grundkörper (2) festgelegt ist.

9. Ofenform nach Anspruch 8, **dadurch gekennzeichnet, dass** die Randanordnung (7) an den Ofenform-Grundkörper (2) angeklebt ist.

10. Ofenform nach Anspruch 8 oder 9, **dadurch gekennzeichnet, dass** die Randanordnung (7) an den Ofenform-Grundkörper (2) angeschweißt ist.

11. Ofenform nach einem der vorherigen Ansprüche, **dadurch gekennzeichnet, dass** die Randanordnung (7) mindestens einen Griff (10) umfasst.

12. Ofenform nach einem der vorherigen Ansprüche, **dadurch gekennzeichnet, dass** die Randanordnung (7) ein Spritzgussteil ist.

13. Ofenform nach einem der vorherigen Ansprüche, **dadurch gekennzeichnet, dass** diese eine Länge zwischen 350 mm und 500 mm und eine Breite zwischen 250 mm und 400 mm aufweist.

14. Verfahren zur Herstellung einer Ofenform, insbesondere nach einem der vorherigen Ansprüche, umfassend die Schritte
- Bereitstellen eines Ofenform-Grundkörpers (2), der Silikon umfasst, und
- randseitiges Anordnen einer Randanordnung (7) an dem Ofenform-Grundkörper (2), wobei die Randanordnung (7)
-- steifer als der Ofenform-Grundkörper (2) ist,
-- umfangsseitig geschlossen ist,
-- geometrisch an eine Außenkontur des Ofenform-Grundkörpers (2) angepasst ist,
-- sich aus einem unteren Randteil (12) und einem oberen Randteil (11) zusammensetzt, wobei die Randteile (12, 11) an einander gegenüberliegenden Seiten eines Randbereichs des Ofenform-Grundkörpers (2) angeordnet sind,
-- unten und oben an dem Randbereich des Ofenform-Grundkörpers (2) angeordnet ist, und
-- eine Aussparung (13, 14) aufweist, in welche der Ofenform-Grundkörper (2) eingreift,
-- wobei zumindest eine Unterseite der Randanordnung (7) eben ist,
-- wobei die Randanordnung (7) fest und unlösbar an dem Ofenform-Grundkörper (2) angeordnet ist,
-- wobei jedes Randteil (12, 11) eine Teilaussparung hat, deren Gesamthöhe einer Dicke des Randbereichs des Ofenform-Grundkörpers (2) entspricht.

## Claims

1. Oven dish for preparing food,
a) having an oven dish base body (2), which comprises silicone, and
b) having an edge arrangement (7) arranged at the edge of the oven dish base body (2), which edge arrangement
i) is stiffer than the oven dish base body (2),
ii) is closed on the circumferential side, and
iii) is geometrically adapted to an outer contour of the oven dish base body (2),
c) wherein the edge arrangement (7) is composed of a lower edge part (12) and an upper edge part (11),
d) wherein the edge parts (12, 11) are arranged on opposite sides of an edge region of the oven dish base body (2),
e) wherein the edge arrangement (7) is arranged at the bottom and top of the edge region of the oven dish base body (2),
f) wherein at least one lower side of the edge arrangement (7) is flat, **characterised in that**
g) the edge arrangement (7) has a recess (13,1 4), in which the oven dish base body (2) engages,
h) each edge part (12, 11) has a partial recess, whose overall height corresponds to a thickness of the edge region of the oven dish base body (2), and
i) the edge arrangement (7) is arranged fixedly and non-detachably on the oven dish base body (2).

2. Oven dish according to claim 1, **characterised in that** the oven dish base body (2) is non-metallic.

3. Oven dish according to claim 1 or 2, **characterised in that** the oven dish base body (2) is flexible.

4. Oven dish according to one of the preceding claims, **characterised in that** the oven dish base body (2) comprises fibres, in particular glass fibres.

5. Oven dish according to claim 4, **characterised in that** the fibres are arranged in a mesh-like pattern.

6. Oven dish according to one of the preceding claims, **characterised in that** the edge arrangement (7) is rigid or substantially rigid.

7. Oven dish according to one of the preceding claims, **characterised in that** the edge arrangement (7) extends in a plane.

8. Oven dish according to one of the preceding claims, **characterised in that** the edge arrangement (7) is fixed to the oven dish base body (2) by a material fit, force fit, and/or form fit.

9. Oven dish according to claim 8, **characterised in that** the edge arrangement (7) is bonded to the oven dish base body (2).

10. Oven dish according to claim 8 or 9, **characterised in that** the edge arrangement (7) is welded to the oven dish base body (2).

11. Oven dish according to one of the preceding claims, **characterised in that** the edge arrangement (7) comprises at least one handle (10).

12. Oven dish according to one of the preceding claims, **characterised in that** the edge arrangement (7) is an injection-moulded part.

13. Oven dish according to one of the preceding claims, **characterised in that** it has a length of between 350 mm and 500 mm and a width of between 250 mm and 400 mm.

14. Method for producing an oven dish, in particular according to one of the preceding claims, comprising the steps of
- providing an oven dish base body (2), which comprises silicone, and
- arranging an edge arrangement (7) at the edge of the oven dish base body (2), wherein the edge arrangement (7)
-- is stiffer than the oven dish base body (2),
-- is closed on the circumferential side,
-- is geometrically adapted to an outer contour of the oven dish base body (2),
-- is composed of a lower edge part (12) and an upper edge part (11), wherein the edge parts (12, 11) are arranged on opposite sides of an edge region of the oven dish base body (2),
-- is arranged at the bottom and top of the edge region of the oven dish base body (2), and
-- has a recess (13,1 4), in which the oven dish base body (2) engages,
-- wherein at least one lower side of the edge arrangement (7) is flat,
-- wherein the edge arrangement (7) is arranged fixedly and non-detachably on the oven dish base body (2),
-- wherein each edge part (12, 11) has a partial recess, whose overall height corresponds to a thickness of the edge region of the oven dish base body (2).

## Revendications

1. Moule à four pour la préparation d'aliments,
a) comportant un corps de base de moule à four (2) comprenant une silicone, et
b) comportant un agencement de bord (7) disposé côté bord du corps de base de moule à four (2), lequel agencement de bord
i) est plus rigide que le corps de base de moule à four (2),
ii) est fermé au niveau de sa circonférence, et
iii) est géométriquement adapté à un contour extérieur du corps de base de moule à four (2),
c) dans lequel l'agencement de bord (7) se compose d'une partie de bord inférieure (12) et d'une partie de bord supérieure (11),
d) dans lequel les parties de bord (12, 11) sont disposées sur des côtés mutuellement opposés d'une zone de bord du corps de base de moule à four (2),
e) dans lequel l'agencement de bord (7) est disposé en bas et en haut de la zone de bord du corps de base de moule à four (2),
f) dans lequel au moins une face inférieure de l'agencement de bord (7) est plane,
**caractérisé en ce que**
g) l'agencement de bord (7) comporte un évidement (13, 14) dans lequel le corps de base de moule à four (2) s'engage ;
h) chaque partie de bord (12, 11) a un évidement partiel dont la hauteur totale correspond à une épaisseur de la zone de bord du corps de base de moule à four (2), et
i) l'agencement de bord (7) est disposé sur le corps de base de moule à four (2) de manière fixe et non détachable.

2. Moule à four selon la revendication 1, **caractérisé en ce que** le corps de base de moule à four (2) n'est pas métallique.

3. Moule à four selon la revendication 1 ou 2, **caractérisé en ce que** le corps de base de moule à four (2) est souple.

4. Moule à four selon l'une des revendications précédentes, **caractérisé en ce que** le corps de base de moule à four (2) comprend des fibres, en particulier des fibres de verre.

5. Moule à four selon la revendication 4, **caractérisé en ce que** les fibres sont disposées de manière réticulée.

6. Moule à four selon l'une des revendications précédentes, **caractérisé en ce que** l'agencement de bord (7) est rigide ou sensiblement rigide.

7. Moule à four selon l'une des revendications précédentes, **caractérisé en ce que** l'agencement de bord (7) s'étend dans un plan.

8. Moule à four selon l'une des revendications précédentes, **caractérisé en ce que** l'agencement de bord (7) est fixé sur le corps de base de moule à four (2) par liaison de matière, de manière forcée et/ou par complémentarité de formes.

9. Moule à four selon la revendication 8, **caractérisé en ce que** l'agencement de bord (7) est collé au corps de base de moule à four (2).

10. Moule à four selon la revendication 8 ou 9, **caractérisé en ce que** l'agencement de bord (7) est soudé au corps de base de moule à four (2).

11. Moule à four selon l'une des revendications précédentes, **caractérisé en ce que** l'agencement de bord (7) comprend au moins une poignée (10).

12. Moule à four selon l'une des revendications précédentes, **caractérisé en ce que** l'agencement de bord (7) est une pièce moulée par injection.

13. Moule à four selon l'une des revendications précédentes, **caractérisé en ce que** ce moule a une longueur comprise entre 350 mm et 500 mm et une largeur comprise entre 250 mm et 400 mm.

14. Procédé de fabrication d'un moule à four, en particulier selon l'une des revendications précédentes, comprenant les étapes consistant à :
- fournir un corps de base de moule à four (2) comprenant une silicone, et
- disposer un agencement de bord (7) côté bord du corps de base de moule à four (2), dans lequel l'agencement de bord (7)
-- est plus rigide que le corps de base de moule à four (2),
-- est fermé au niveau de sa circonférence,
-- est géométriquement adapté à un contour extérieur du corps de base de moule à four (2),
-- se compose d'une partie de bord inférieure (12) et d'une partie de bord supérieure (11), dans lequel les parties de bord (12, 11) sont disposées sur des côtés mutuellement opposés d'une zone de bord du corps de base de moule à four (2),
-- est disposé en bas et en haut de la zone de bord du corps de base de moule à four (2), et
-- comporte un évidement (13, 14) dans lequel le corps de base de moule à four (2) s'engage,
-- dans lequel au moins une face inférieure de l'agencement de bord (7) est plane,
-- dans lequel l'agencement de bord (7) est disposé sur le corps de base de moule à four (2) de manière fixe et non détachable,
-- dans lequel chaque partie de bord (12, 11) a un évidement partiel dont la hauteur totale correspond à une épaisseur de la zone de bord du corps de base de moule à four (2).
